# EUROPEAN PATENT APPLICATION

(11) **EP 4 443 190 A1**
(43) Date of publication of application: **09.10.2024**
(21) Application number: 22900826.3
(22) Date of filing: 29.03.2022
(51) Int. Cl.: G01S 7/03, G01S 7/10, G01S 7/32, G01S 13/937

(54) **INFORMATION PROCESSING METHOD, RADAR APPARATUS, AND COMPUTER PROGRAM**

(30) Priority: 02.12.2021 JP 2021196344
(71) Applicant: Furuno Electric Co., Ltd., Nishinomiya-City, Hyogo 662-8580 (JP)
(72) Inventor: SAKAMOTO, Masaki, Nishinomiya-City, Hyogo 662-8580 (JP); NOSE, Masaya, Nishinomiya-City, Hyogo 662-8580 (JP); MIZUHARA, Yuu, Tokyo 155-0031 (JP); YAMASHITA, Tetsu, Tokyo 155-0031 (JP); IKU, Sei, Tokyo 155-0031 (JP)
(74) Representative: Müller Hoffmann & Partner
(86) International application number: PCT/JP2022/015561
(87) International publication number: WO 2023/100390

(57) **Abstract**

[Problem] To provide an information processing method, radar apparatus, and computer program which make it possible to recognize a false image on a radar echo. [Solution] Provided is an information processing method in which: image data that includes time-series radar images is acquired; position data of a first false image candidate is acquired by inputting one acquired radar image into a first training model that outputs the position data of the first false image candidate when one radar image has been inputted; position data of a second false image candidate is acquired by inputting the acquired time-series radar images into a second training model that outputs the position data of the second false image candidate when the time-series radar images have been inputted; and a false image on a radar echo is detected on the basis of the position data of the acquired first false image candidate and second false image candidate.

## Description

### Technical Field

The present invention relates to an information processing method, a radar apparatus, and a computer program.

### Background

Navigation radar is an important apparatus that detects objects around one's own ship and provides information for safe and optimal avoidance actions. Patent Document 1 discloses a technology in which an AIS apparatus of a ship equipped with an ARPA radar apparatus is connected to the ARPA radar apparatus via an interface, and which compares the received dynamic information of nearby ships and the radar symbol information acquired from the ARPA radar apparatus every moment and alerts the operator by using radar symbol information having no dynamic information recognized with a predetermined match as transmission stop warning information and using dynamic information having no radar symbol information recognized with a predetermined match as no situation report warning information.

### Citation List

### Patent Document

[Patent Document 1] Japanese Patent No. 3794641

### SUMMARY OF INVENTION

### Technical Problem

A radar emits radio waves around the own ship and observes the reflected waves to display information on the orientation and distance of an object as a radar echo. However, on the other hand, the radio waves emitted to an object may be reflected by another object, generating a false image that does not actually exist.

The present invention has been made in view of such circumstances, and an object of the present invention is to provide an information processing method, a radar apparatus, and a computer program that can recognize a false image on a radar echo.

### Solution to Problem

The present application includes a plurality of means for solving the above problem, but as one example, an information processing method includes: acquiring image data that includes time-series radar images; inputting acquired one radar image to a first training model that outputs position data of a first false image candidate in response to one radar image being input, to acquire the position data of the first false image candidate; inputting acquired time-series radar images to a second training model that outputs position data of a second false image candidate in response to time-series radar images being input, to acquire the position data of the second false image candidate; and detecting a false image of a radar echo based on the acquired position data of the first false image candidate and the second false image candidate.

### Effects of Invention

According to the present invention, it is possible to recognize a false image on a radar echo.

### BRIEF DESCRIPTION OF DRAWINGS

FIG. 1 is a diagram showing an example of the configuration of the radar apparatus.
FIG. 2 is a diagram showing an example of the echo signal.
FIG. 3 is a diagram showing an example of the radar image.
FIG. 4 is a diagram showing an example of the occurrence of the false image.
FIG. 5 is a diagram showing an example of the false image detection using the first training model.
FIG. 6 is a diagram showing the first example of the false image.
FIG. 7 is a diagram showing an example of the false image detection using the second training model.
FIG. 8 is a diagram showing the second example of the false image.
FIG. 9 is a diagram showing an example of the final determination method for the false image.
FIG. 10 is a diagram showing an example of the display image.
FIG. 11 is a diagram showing an example of the processing procedure of the radar apparatus.

### DESCRIPTION OF EMBODIMENTS

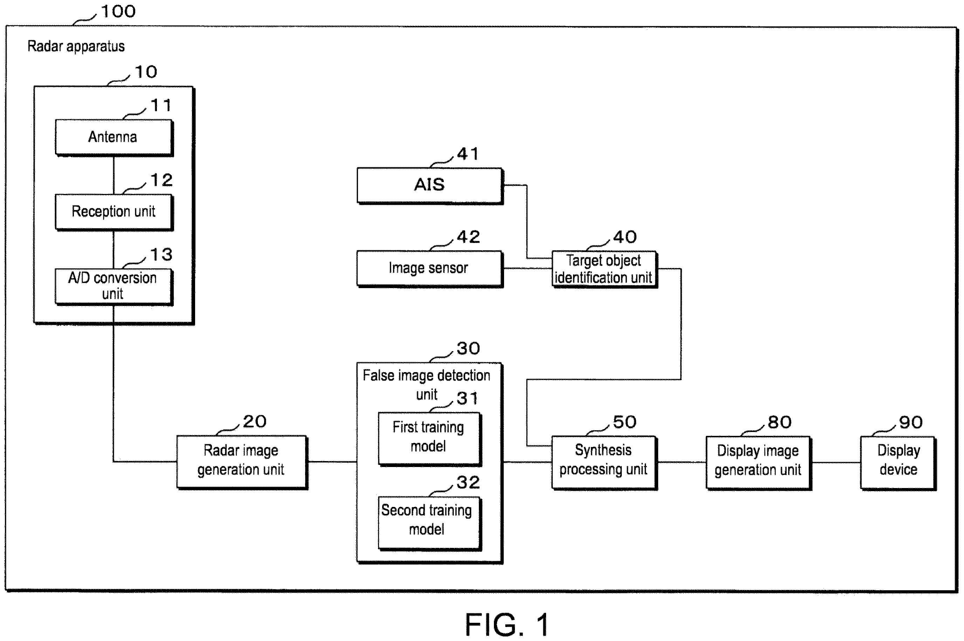

Embodiments of the present invention will be described hereinafter. FIG. 1 is a diagram showing an example of the configuration of a radar apparatus 100. The radar apparatus 100 includes an antenna unit 10, a radar image generation unit 20, a false image detection unit 30, a target object identification unit 40, an AIS (Automatic Identification System) 41, an image sensor 42, a synthesis processing unit 50, a display image generation unit 80, and a display device 90. Nevertheless, the target object identification unit 40, the AIS (Automatic Identification System) 41, and the image sensor 42 may be configured as devices separate from the radar apparatus 100. The antenna unit 10 includes an antenna 11, a reception unit 12, and an A/D conversion unit 13. The false image detection unit 30 includes a first training model 31 and a second training model 32. The AIS 41 and the image sensor 42 are also collectively referred to as a sensor unit.

The antenna 11 is a radar antenna that is capable of transmitting highly directional pulsed radio waves (transmission waves). The antenna 11 is configured to receive reflected waves from an object such as a target object. The radar apparatus 100 measures the time from when pulsed radio waves are transmitted until when reflected waves are received. Thereby, the radar apparatus 100 can detect the distance to the target object. The antenna 11 is configured to be rotatable 360° on a horizontal plane. The antenna 11 is configured to repeatedly transmit and receive radio waves at predetermined intervals while changing the transmission direction of the pulsed radio waves (while changing the antenna angle). Thereby, the radar apparatus 100 can detect a target object on a plane around the own ship over 360°.

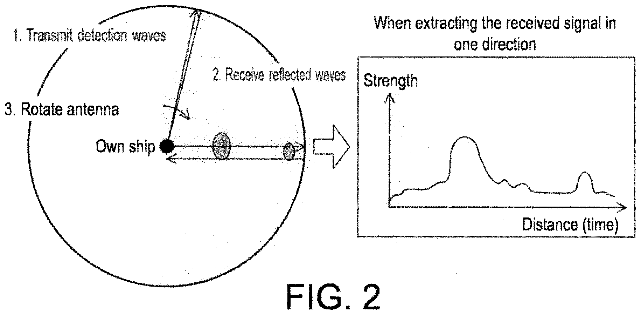

FIG. 2 is a diagram showing an example of an echo signal. As shown in FIG. 2, the radar apparatus 100 on the own ship transmits detection waves in a certain direction and receives reflected waves. When the reflected waves are received, the antenna rotates to repeat the same process of transmitting detection waves and receiving reflected waves. The same process is repeated over 360 degrees around the own ship. One image is generated after the antenna rotates 360 degrees. When a received signal (echo signal) in one direction is extracted, the strength of the received signal is obtained according to the distance from the own ship. It is known that an object exists at a distance where the signal strength is high. It is assumed that a target object is an object that actually exists such as another ship, and a false image is an object that does not actually exist.

The reception unit 12 detects and amplifies the echo signal obtained from the reflected waves received by the antenna 11, and outputs the amplified echo signal to the A/D conversion unit 13. The A/D conversion unit 13 samples the echo signal in analog form and converts the echo signal into digital data (echo data) composed of multiple bits. Here, the echo data includes data specifying the strength (signal level) of the echo signal obtained from the reflected waves received by the antenna 11. The A/D conversion unit 13 outputs the echo data to the radar image generation unit 20.

The radar image generation unit 20 generates a radar image based on the echo data output from the A/D conversion unit 13.

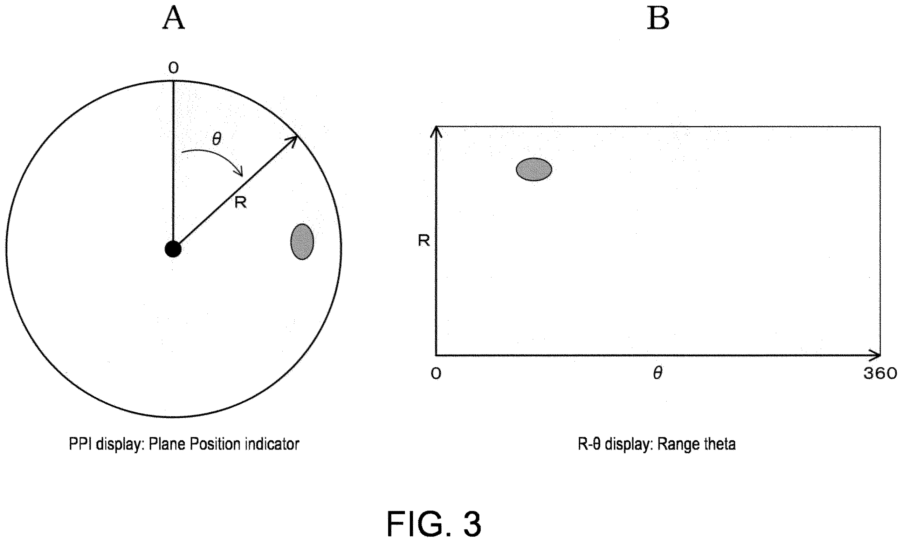

FIG. 3 is a diagram showing an example of the radar image. A of FIG. 3 is a radar image displayed in PPI (Plane Position Indicator), and is a radar image over 360 degrees in the horizontal direction centered on the own ship position. The radar image generation unit 20 includes an R-θ conversion unit, and can convert a radar image displayed in PPI into a radar image displayed in R-θ (Range theta) as shown in B of FIG. 3. In the radar image displayed in R-θ, the vertical axis shows the distance from the own ship, and the horizontal axis shows the orientation (from 0 to 360 degrees). The radar image generation unit 20 outputs the radar image displayed in R-θ to the false image detecting unit 30. In addition, a radar image displayed in R-θ (Range theta) may be generated from the echo data output from the A/D conversion unit 13 without generating a radar image displayed in PPI.

Next, the mechanism by which a false image occurs will be explained.

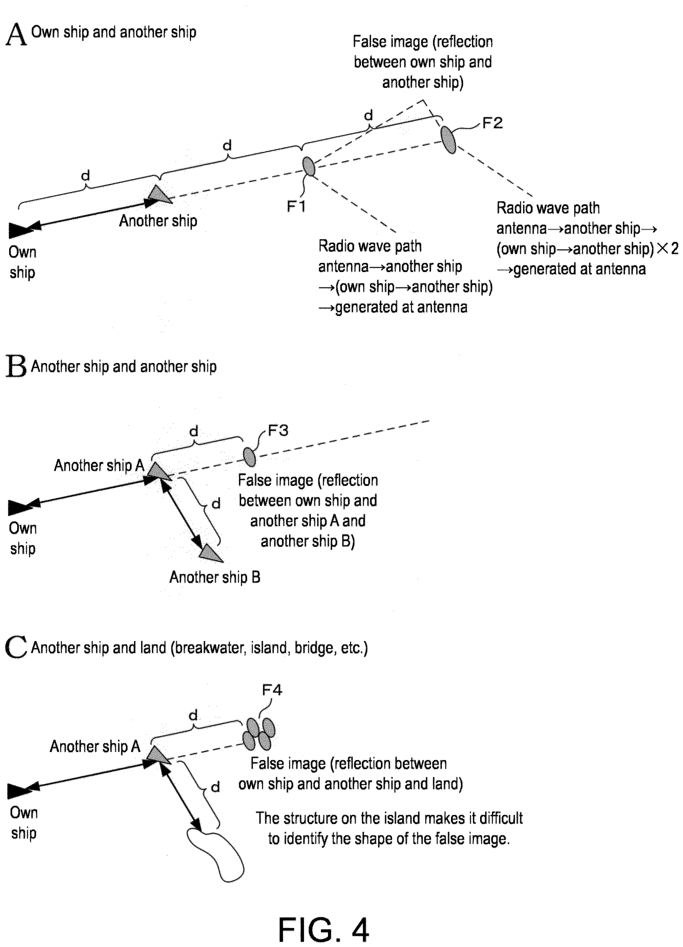

FIG. 4 is a diagram showing an example of the occurrence of a false image. A of FIG. 4 shows how a false image occurs between the own ship and another ship. When the radio waves emitted from the antenna on the own ship are reflected by another ship, the reflected waves are reflected by the own ship, and the reflected waves are reflected by another ship and received by the antenna, on the radar echo, an object exists at a position indicated by the symbol F1. However, since there is actually no target object (another ship), a false image is generated at the position of the symbol F1. Similarly, in the case where reflection is repeated twice between the own ship and another ship, a false image is generated at a position of the symbol F2. Thus, false images occur due to the reflection (including multiple reflections) of radio waves between the own ship and another ship.

B of FIG. 4 shows how a false image occurs between another ship and another ship. As shown in B of FIG. 4, another ship A and another ship B exist around the own ship. When the radio waves emitted from the antenna on the own ship are reflected by another ship A, the reflected waves are reflected by the own ship B, and the reflected waves are reflected by another ship A and received by the antenna, on the radar echo, an object exists at a position indicated by the symbol F3. However, since there is actually no target object (another ship), a false image is generated at the position of the symbol F3. Thus, false images occur due to the reflection of radio waves between another ship and another ship.

C of FIG. 4 shows how a false image occurs between another ship and land. As shown in C of FIG. 4, another ship A and land (including, for example, a structure or the like on an island) exist around the own ship. When the radio waves emitted from the antenna on the own ship are reflected by another ship A, the reflected waves are reflected by the structure on the land, and the reflected waves are reflected by another ship A and received by the antenna, on the radar echo, an object exists at a position indicated by the symbol F4. However, since there is actually no target object (another ship), a false image is generated at the position of the symbol F4. Thus, false images occur due to the reflection of radio waves between another ship and land.

False images are also caused by a side lobe, a backwash, a cloud, etc. The side lobe is a portion where the radio wave strength is weaker than the main lobe where the strength of the radio waves emitted from the antenna is maximum, and is a leakage radio wave that is emitted in a direction different from the direction of the main lobe by, for example, 30 to 45 degrees. The backwash is a wave that occurs behind a ship when sailing. Generally, radar echoes of a backwash and a cloud are not false images, but here they are treated as a type of false image as radar echoes that are not subject to avoidance.

Next, a method for detecting a false image will be explained.

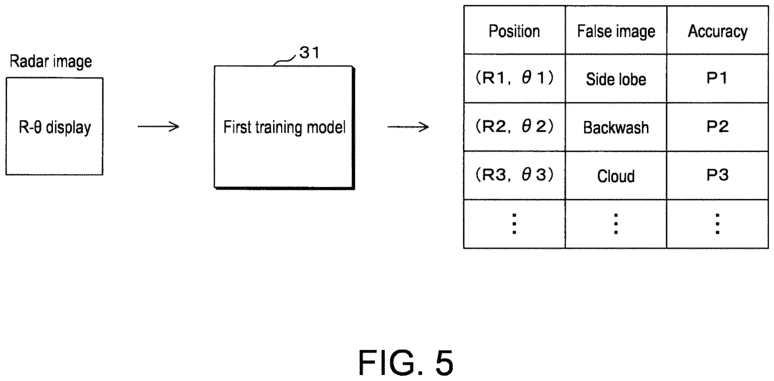

FIG. 5 is a diagram showing an example of the false image detection using a first training model 31. As shown in FIG. 5, when one radar image displayed in R-θ is input to the first training model 31, the first training model 31 outputs position data of false image and the accuracy thereof regarding the false image (first false image candidate) caused by a side lobe, a backwash, and a cloud. The position data of false image has area information. The first training model 31 can use semantic segmentation using deep learning, and can estimate a class label (for example, label 1: side lobe, label 2: backwash, and label 3: cloud) for all the pixels in the radar image. For example, a plurality of pixels estimated to be a side lobe may be combined into one pixel group, and the center position of the pixel group may be set as the position of the side lobe. For false images on a radar echo, the pixel group can be treated as one false image. Further, the accuracy of the false image is obtained by averaging the accuracy of each pixel estimated to be a side lobe. The first training model 31 may use a fully convolutional network (FCN), an encoder-decoder structure model, YOLO (You Look Only Once), or the like.

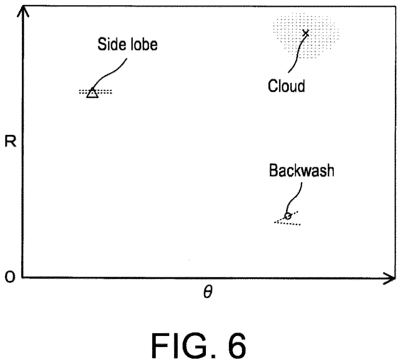

FIG. 6 is a diagram showing the first example of a false image. FIG. 6 shows a false image on a radar image. As shown in FIG. 6, a false image caused by a side lobe is often displayed in a straight line in R-θ display. The symbol Δ is the center of the false image and indicates the position of the false image. A false image caused by a backwash often appears distorted in a V-shape. The symbol O is the center of the false image and indicates the position of the false image. In addition, the symbol O may be attached to both V-shaped false images. A false image caused by a cloud is often relatively vague, and the area of the false image is often relatively large. The symbol X is the center of the false image and indicates the position of the false image. It should be noted that the false images shown in FIG. 6 are schematic illustrations, and may differ from the actual false images on a radar echo.

The first training model 31 can be generated, for example, as follows. That is, in the case where one radar image displayed in R-θ is input to the first training model 31, the first training model 31 may be generated so as to output the position data of a first false image candidate. Specifically, for the radar image displayed in R-θ, an image in which a false image that is definitely confirmed to be a false image is annotated, as shown in FIG. 6, is prepared as teacher data. Then, a large number of sets of radar images displayed in R-θ and corresponding teacher data are collected as training data. The teacher data is, for example, radar images displayed in R-θ, to which class labels are attached, such as label 1: side lobe, label 2: backwash, and label 3: cloud. The first training model 31 can be generated by adjusting the parameters of the first training model 31 based on the training data so that the value of the loss function, which is based on the position data of the false image output by the first training model 31 by inputting the radar image displayed in R-θ to the first training model 31 and the position data of the false image included in the training data, is minimized.

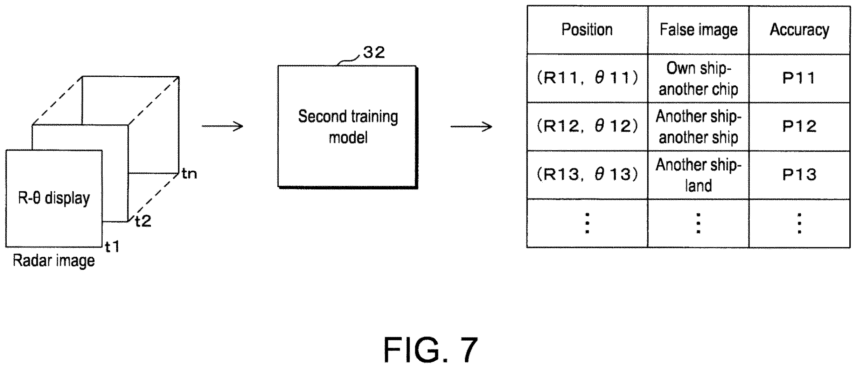

FIG. 7 is a diagram showing an example of the false image detection using a second training model 32. As shown in FIG. 7, when radar images of a time series (t1, t2, ..., tn) displayed in R-θ are input to the second training model 32, the second training model 32 outputs position data of false images and the accuracy thereof regarding the false image (second false image candidate) caused by reflection between own ship and another ship, reflection between another ship and another ship, and reflection between another ship and land. When the radar rotates once, one radar image displayed in R-θ is generated. The time series (t1, t2, ..., tn) may be points in time each time the radar rotates, or may be points in time each time the radar rotates multiple times. The number of the time-series radar images may be determined as appropriate, such as 10, 20, 30, etc., for example. Similarly to the first training model 31, the second training model 32 can also utilize semantic segmentation using deep learning, and can estimate a class label (for example, label 1: reflection between own ship and another ship, label 2: reflection between another ship and another ship, and label 3: reflection between another ship and land) for all the pixels in the radar image. For example, a plurality of pixels estimated to be reflection between own ship and another ship may be combined into one pixel group, and the center position of the pixel group may be set as the position of the false image due to reflection between own ship and another ship. For false images on a radar echo, the pixel group can be treated as one false image. Further, the accuracy of the false image is obtained by averaging the accuracy of each pixel estimated to be reflection between own ship and another ship. By inputting the time-series radar images, in the second training model 32, it is possible to take into consideration the temporal behaviors of the positional relationships between own ship and another ship, between another ship and another ship, and between another ship and land, and to accurately detect false images caused by reflection between own ship and another ship, reflection between another ship and another ship, and reflection between another ship and land. The second training model 32 may use a recurrent neural network (RNN)-based model, an ALSTM (Attention Long Short Term Memory), a Transformer, or the like.

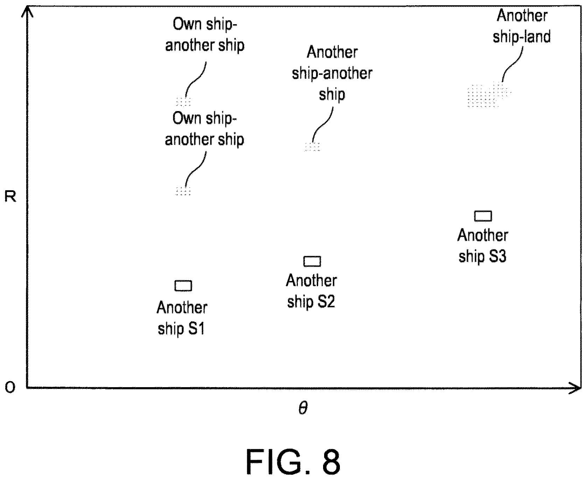

FIG. 8 is a diagram showing the second example of a false image. FIG. 8 displays a false image on a radar image. As shown in FIG. 8, a false image caused by reflection between own ship and another ship is often displayed on an extension line between the own ship and another ship S1 in R-θ display. In this case, the false image is generated due to reflection between the own ship and another ship S1. A false image caused by reflection between another ship and another ship is displayed on an extension line between the own ship and another ship S2. In this case, the false image is generated due to reflection between another ship S2 and another ship S1. A false image caused by reflection between another ship and land is displayed on an extension line between the own ship and another ship S3. In this case, the false image is generated due to reflection between another ship S3 and land. A false image represents a collection of pixels, and the center of the pixel group is the position of the false image. It should be noted that the false images shown in FIG. 8 are schematic illustrations, and may differ from the actual false images on a radar echo.

The second training model 32 can be generated, for example, as follows. That is, in the case where time-series radar images displayed in R-θ are input to the second training model 32, the second training model 32 may be generated so as to output the position data of a second false image candidate. Specifically, for the time-series radar images displayed in R-θ, an image in which a false image that is definitely confirmed to be a false image is annotated, as shown in FIG. 8, is prepared as teacher data. The teacher data is, for example, radar images displayed in R-θ to which class labels are attached, such as label 1: reflection between own ship and another ship, label 2: reflection between another ship and another ship, and label 3: reflection between another ship and land. Then, a large number of sets of time-series radar images displayed in R-θ and corresponding teacher data are collected as training data. The second training model 32 can be generated by adjusting the parameters of the second training model 32 based on the training data so that the value of the loss function, which is based on the position data of the false image output by the second training model 32 by inputting the time-series radar images displayed in R-θ to the second training model 32 and the position data of the false image included in the training data, is minimized.

As described above, the radar apparatus 100 acquires image data including time-series radar images; inputs the acquired one radar image to the first training model 31 that outputs the position data of the first false image candidate in the case where one radar image is input, to acquire the position data of the first false image candidate; inputs the acquired time-series radar images to the second training model 32 that outputs the position data of the second false image candidate in the case where the time-series radar images are input, to acquire the position data of the second false image candidate; and detects a false image of a radar echo based on the acquired position data of the first false image candidate and the second false image candidate, thereby making it possible to recognize a false image on a radar echo.

The AIS 41 is a communication device that can receive AIS data from another ship that exists around the own ship. The AIS data includes data such as identification code, ship name, position, course, ship speed, and destination. The AIS 41 outputs the AIS data to the target object identification unit 40. It should be noted that the present invention is not limited to AIS, and may use VDES (VHF Data Exchange System).

The image sensor 42 can be configured with a visible light camera or an infrared camera, for example. The image sensor 42 photographs the outside of the ship and generates an image. The image sensor 42 may be installed, for example, on the bridge of the own ship to face toward the bow direction. The image sensor 42 may be configured to pan (swing in the horizontal direction), tilt (swing in the vertical direction), and zoom in response to an operation of the user. The image sensor 42 outputs image data to the target object identification unit 40.

The target object identification unit 40 uses at least one of the AIS data output by the AIS 41 and the image data output by the image sensor 42 to identify a target object which is an object that actually exists (another ship, etc.). The position of the target object can be identified, for example, by the relative position in terms of distance and orientation from the own ship, or the absolute position in terms of latitude and longitude. In the case of identifying a target object based on image data, the target object identification unit 40 may use a training model generated by machine learning. In this case, the training model can use an object detection model such as YOLO (You Only Look Once) or SSD (Single Shot Multibox Detector).

The synthesis processing unit 50 makes a final determination as to whether the false image detected by the false image detection unit 30 is a false image or a real image (target object) rather than a false image, based on the detection result detected by the false image detection unit 30 and the identification result identified by the target object identification unit 40. The determination method performed by the synthesis processing unit 50 will be described below.

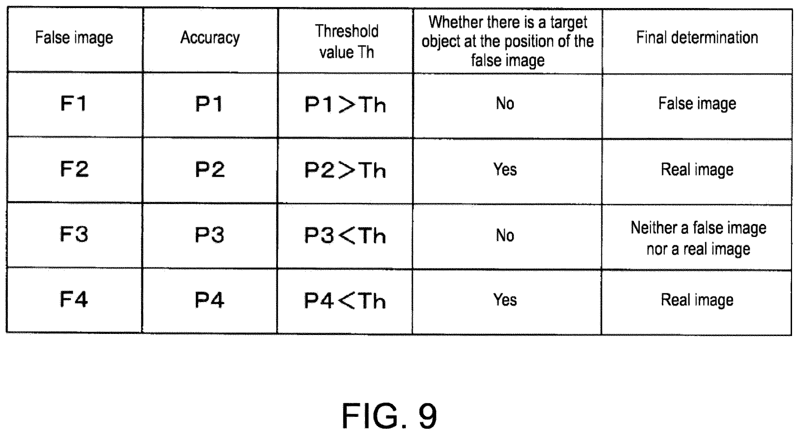

FIG. 9 is a diagram showing an example of a final determination method for a false image. The detection results detected by the false image detection unit 30 are assumed to be false images F1 to F4, and the accuracy thereof is assumed to be P1 to P4, respectively. As shown in FIG. 9, the accuracy P1 of the false image F1 exceeds a threshold value Th, and there is a high possibility that the false image F1 is a false image. Further, since there is no target object identified by the target object identification unit 40 at the position of the false image, the false image F 1 is finally determined to be a false image. As for the false image F2, the accuracy P2 exceeds the threshold value Th and there is a high possibility that the false image F2 is a false image, but since there is a target object identified by the target object identification unit 40 at the position of the false image, the false image F2 is finally determined to be a real image (not a false image). As for the false image F3, the accuracy P3 is below the threshold value Th, and there is a low possibility that the false image F3 is a false image. Since there is no target object identified by the target object identification unit 40 at the position of the false image, the false image F3 is determined to be neither a false image nor a real image. In this case, the false image F3 may be finally determined to be a false image. As for the false image F4, the accuracy P4 is below the threshold value Th, and there is a low possibility that the false image F4 is a false image. Further, since there is a target object identified by the target object identification unit 40 at the position of the false image, the false image F4 is finally determined to be a real image. It should be noted that the final determination method is not limited to the example shown in FIG. 9.

As described above, the radar apparatus 100 may acquire the detection result (identification result) at the sensor unit including at least one of the AIS 41 and the image sensor 42, and detect a false image on a radar echo based on the acquired detection result, the probability (accuracy) regarding the position data of the first false image candidate output by the first training model 31, and the probability regarding the position data of the second false image candidate output by the second training model, thereby making it possible to further improve the accuracy of detecting a false image.

The display image generation unit 80 generates a display image to be displayed on the display device 90 based on the radar image generated by the radar image generation unit 20 and the final determination result of the synthesis processing unit 50. The display image includes, for example, an electronic nautical chart.

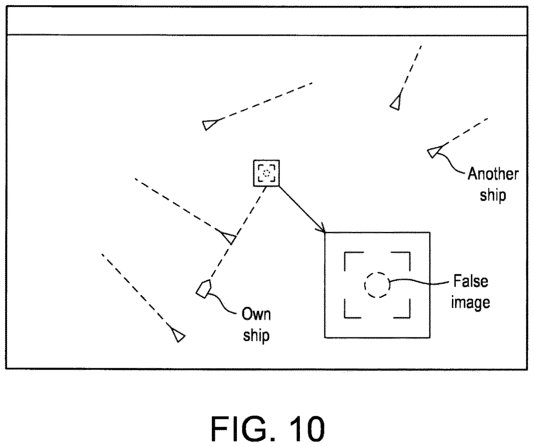

FIG. 10 is a diagram showing an example of the display image. As shown in FIG. 10, the display image displays an extensive nautical chart of the course direction of the own ship, and displays the positions and course directions of other ships around. In order to avoid coming close to other ships, the own ship navigates autonomously by specifying other ships approaching in the course direction of the own ship as avoidance targets. In the drawing, the symbol of the object determined to be a false image is indicated by a dashed circle, and the false image is excluded from the avoidance target. In this way, the radar apparatus 100 can differentiate the display mode depending on whether the radar echo has a false image. In the illustrated example, the false image is displayed as a dashed circle to be distinguished from other ships (target objects), but the present invention is not limited thereto, and the color of the false image may be changed. Furthermore, the false image may be deleted from the nautical chart and hidden. Thereby, it is easy to recognize the avoidance target. In addition, in the case where the radar echo has a false image, the display image generation unit 80 may differentiate the display mode of the false image based on the false image probability. For example, an object that is more likely to be a false image may be displayed in a brighter or more conspicuous color. Thereby, it is possible to visualize the certainty of the false image.

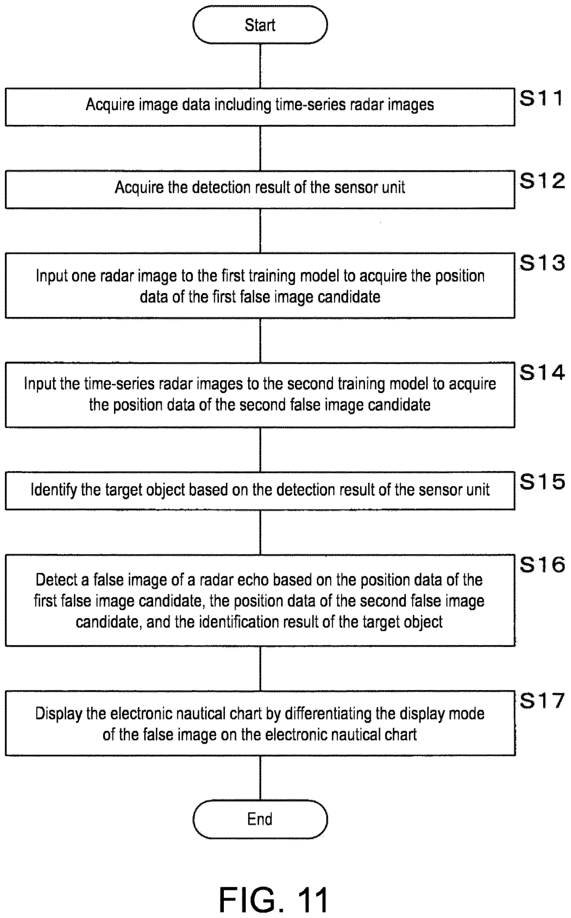

FIG. 11 is a diagram showing an example of the processing procedure of the radar apparatus 100. The radar apparatus 100 acquires image data including time-series radar images (S11), and acquires the detection result of the sensor unit (S12). The radar apparatus 100 inputs one radar image to the first training model 31 to acquire the position data of the first false image candidate (S13). The first false image candidate includes a false image caused by at least one of a side lobe, a backwash, and a cloud.

The radar apparatus 100 inputs the time-series radar images to the second training model 32 to acquire the position data of the second false image candidate (S14). The second false image candidate includes a false image caused by at least one of multiple reflections of the detection wave between the own ship and another ship, reflection between another ship and another ship, and reflection between another ship and land. The radar apparatus 100 identifies the target object based on the detection result of the sensor unit (S15).

The radar apparatus 100 detects a false image of a radar echo based on the position data of the first false image candidate, the position data of the second false image candidate, and the identification result of the target object (S16). In step 16, the determination method illustrated in FIG. 9 may be used. Before performing the process of step S16, the processes of steps S11 to S15 may be repeated as appropriate. The radar apparatus 100 displays the electronic nautical chart with the display mode of the false image on the electronic nautical chart different from the display mode of the target object (S17), and ends the processing.

All or some of the radar image generation unit 20, the false image detection unit 30, the target object identification unit 40, the synthesis processing unit 50, and the display image generation unit 80 of the radar apparatus 100 can also be implemented using a computer equipped with a CPU (processor), a RAM, etc. Each of the above units of the radar apparatus 100 can be implemented on a computer by loading a computer program (recordable on a recording medium) that defines the processing procedure shown in FIG. 11 into the RAM provided in the computer and executing the computer program on the CPU (processor).

The information processing method of this embodiment includes: acquiring image data that includes time-series radar images; inputting acquired one radar image to a first training model that outputs position data of a first false image candidate in response to one radar image being input, to acquire the position data of the first false image candidate; inputting acquired time-series radar images to a second training model that outputs position data of a second false image candidate in response to time-series radar images being input, to acquire the position data of the second false image candidate; and detecting a false image of a radar echo based on the acquired position data of the first false image candidate and the second false image candidate.

The information processing method of this embodiment further includes: acquiring a detection result at a sensor unit that includes at least one of an AIS and an image sensor; and detecting the false image of the radar echo based on the acquired detection result, a probability regarding the position data of the first false image candidate output by the first training model, and a probability regarding the position data of the second false image candidate output by the second training model.

In the information processing method of this embodiment, the first false image candidate includes a false image caused by at least one of a side lobe, a backwash, and a cloud.

In the information processing method of this embodiment, the second false image candidate includes a false image caused by at least one of multiple reflections of a detection wave between an own ship and another ship, reflection between another ship and another ship, and reflection between another ship and land.

The information processing method of this embodiment further includes differentiating a display mode according to whether the radar echo is a false image or not.

The information processing method of this embodiment further includes differentiating a display mode of the false image based on a false image probability in response to the radar echo being a false image.

The radar apparatus of this embodiment includes: a data acquisition unit which acquires image data that includes time-series radar images; a first acquisition unit which inputs acquired one radar image to a first training model that outputs position data of a first false image candidate in response to one radar image being input, to acquire the position data of the first false image candidate; a second acquisition unit which inputs acquired time-series radar images to a second training model that outputs position data of a second false image candidate in response to time-series radar images being input, to acquire the position data of the second false image candidate; and a detection unit which detects a false image of a radar echo based on the acquired position data of the first false image candidate and the second false image candidate.

The computer program of this embodiment is configured to enable a computer to perform processes of: acquiring image data that includes time-series radar images; inputting acquired one radar image to a first training model that outputs position data of a first false image candidate in response to one radar image being input, to acquire the position data of the first false image candidate; inputting acquired time-series radar images to a second training model that outputs position data of a second false image candidate in response to time-series radar images being input, to acquire the position data of the second false image candidate; and detecting a false image of a radar echo based on the acquired position data of the first false image candidate and the second false image candidate.

### Reference Signs List

10 antenna unit
11 antenna
12 reception unit
13 A/D conversion unit
20 radar image generation unit
30 false image detection unit
31 first training model
32 second training model
40 target object identification unit
50 synthesis processing unit
80 display image generation unit
90 display device

## Claims

1. An information processing method, comprising:
acquiring image data that comprises time-series radar images;
inputting acquired one radar image to a first training model that outputs position data of a first false image candidate in response to one radar image being input, to acquire the position data of the first false image candidate;
inputting acquired time-series radar images to a second training model that outputs position data of a second false image candidate in response to time-series radar images being input, to acquire the position data of the second false image candidate; and
detecting a false image of a radar echo based on the acquired position data of the first false image candidate and the second false image candidate.

2. The information processing method according to claim 1, further comprising:
acquiring a detection result at a sensor unit that comprises at least one of an AIS and an image sensor; and
detecting the false image of the radar echo based on the acquired detection result, a probability regarding the position data of the first false image candidate output by the first training model, and a probability regarding the position data of the second false image candidate output by the second training model.

3. The information processing method according to claim 1 or 2, wherein the first false image candidate comprises a false image caused by at least one of a side lobe, a backwash, and a cloud.

4. The information processing method according to any one of claims 1 to 3, wherein the second false image candidate comprises a false image caused by at least one of multiple reflections of a detection wave between an own ship and another ship, reflection between another ship and another ship, and reflection between another ship and land.

5. The information processing method according to any one of claims 1 to 4, further comprising differentiating a display mode according to whether the radar echo is a false image or not.

6. The information processing method according to any one of claims 1 to 5, further comprising differentiating a display mode of the false image based on a false image probability in response to the radar echo being a false image.

7. A radar apparatus, comprising:
a data acquisition unit configured to acquire image data that comprises time-series radar images;
a first acquisition unit configured to input acquired one radar image to a first training model that outputs position data of a first false image candidate in response to one radar image being input, to acquire the position data of the first false image candidate;
a second acquisition unit configured to input acquired time-series radar images to a second training model that outputs position data of a second false image candidate in response to time-series radar images being input, to acquire the position data of the second false image candidate; and
a detection unit configured to detect a false image of a radar echo based on the acquired position data of the first false image candidate and the second false image candidate.

8. A computer program, configured to enable a computer to perform processes of:
acquiring image data that comprises time-series radar images;
inputting acquired one radar image to a first training model that outputs position data of a first false image candidate in response to one radar image being input, to acquire the position data of the first false image candidate;
inputting acquired time-series radar images to a second training model that outputs position data of a second false image candidate in response to time-series radar images being input, to acquire the position data of the second false image candidate; and
detecting a false image of a radar echo based on the acquired position data of the first false image candidate and the second false image candidate.
